# EUROPEAN PATENT SPECIFICATION

(11) **EP 3 671 183 B1**
(45) Date of publication and mention of the grant of the patent: **18.06.2025**
(21) Application number: 18213307.4
(22) Date of filing: 18.12.2018
(51) Int. Cl.: G01N 21/31, A45D 44/00, G01J 3/46, G01J 3/10, G01N 21/359, G01J 3/28

(54) **METHOD FOR DETERMINING A COMPOSITION OF PIGMENTS IN A HAIR FIBER**
VERFAHREN ZUR BESTIMMUNG DER ZUSAMMENSETZUNG VON PIGMENTEN IN EINER HAARFASER
PROCÉDÉ DE DÉTERMINATION D'UNE COMPOSITION DES PIGMENTS DANS UNE FIBRE DE CHEVEUX

(43) Date of publication of application: 24.06.2020
(73) Proprietor: Henkel AG & Co. KGaA, 40589 Düsseldorf (DE)
(72) Inventor: Knuebel, Hans Georg, 40219 Düsseldorf (DE); Bonnin, Lucile, 40215 Düsseldorf (DE); Zuechner, Lars, 40764 Langenfeld (DE)

(56) References cited:
- DE-A1- 102017 209 225
- US-A1- 2017 119 130
- US-A1- 2018 284 020
- LIN JONATHAN L ET AL: "Hyperspectral imaging with near-infrared-enabled mobile phones for tissue oximetry", PROGRESS IN BIOMEDICAL OPTICS AND IMAGING, SPIE - INTERNATIONAL SOCIETY FOR OPTICAL ENGINEERING, BELLINGHAM, WA, US, vol. 10485, 13 February 2018 (2018-02-13), pages 104850C - 104850C, XP060101911, ISSN: 1605-7422, ISBN: 978-1-5106-0027-0, DOI: 10.1117/12.2290870

## Description

### TECHNICAL FIELD

The invention relates to the field of characterization of hair color, in particular the use of hyperspectral imagery to determine a pigment composition in hair, in particular human hair.

### TECHNOLOGICAL BACKGROUND

Hair is a feature that contributes to people's looks and is most of the time exposed and visible. Hair care is an important part of a person's everyday personal care, with the use of products applied onto hair such as shampoo, mechanical handling of hair with brushes and treatments changing the general appearance of hair such as hair cuts or coloration treatments. One's age, lifestyle, diet or the use of medication can also influence the properties of hair.

A large variety of products is available to take appropriate care of a person's hair. Products intend to target specific hair types, based on color, damage state, greyness levels for example. In order to optimize hair care, knowledge of the current state of a person's hair is needed to select the right hair treatment.

The subjective assessment of a person's hair by a hair stylist or any other person may lead to incorrect assessment of the true state of a person's hair.

To add objectivity to this assessment, quantitative photometric determination of the current hair color of a user can be done. Separate assessment of the oxidative damage of hair or its water content can be done using further optical tools, in particular near infrared spectroscopy. However, even though photometry provides a more accurate picture of the state of hair, it fails to distinguish between identical or substantially identical colors that are obtained using different combinations of pigments.

Indeed, the perceived color of hair results from light absorbed, scattered and reflected by hair fibers. The chemical composition of these hair fibers may comprise a large variety of chemicals in different concentrations, and different mixtures of hair pigments can lead to identical perceived colors. A distinction can be made between natural dyes (for example melanin) and dyes that have been added to the fibers via coloration treatments (artificial dyes).

Artificial dyes are present in hair fibers in concentrations and ratios that are very difficult to predict from the mere knowledge of past coloration treatments.

All this uncertainty leads to random assessment of the pigment composition of hair fibers using conventional color determination techniques.

Furthermore, it is to be noted that different pigments can lead to similar or virtually identical perceived hair colors but the pigments themselves react differently to further hair treatments or further application of hair dyes. This effect is particularly true when hair is subjected to oxidative coloration treatments. For example, a natural medium brown hair color dyed with a lightening shade, e.g. light blonde with 6% hydrogen peroxide will be significantly brighter after the dyeing process than a chemically dyed medium brown hair color. This can be explained by the fact that brown dyes (from previous oxidative coloration treatments) are inherently more stable towards further oxidative treatments than natural dyes receiving a first oxidative hair coloration treatment.

Document US2017119130 A1 describes a method and system for determining hair and skin properties using one or many conventional hyperspectral cameras. Document DE102017209225 A1 describes a device to measure hair properties using light emitted by a combing device reflected from hair and then detected by the combing device.

This illustrates the need to provide a more reliable way of determining the pigment composition of hair.

### SUMMARY OF THE INVENTION

In order to overcome the above drawbacks, the invention provides a method according to independent claim 1 for determining a composition of pigments in a hair fiber, the method comprising:
exposing a region of the hair fiber sequentially to electromagnetic radiation of different wavelengths, wherein the electromagnetic radiation comprises wavelengths in a visible range between 400 nm and 700 nm, as well as wavelengths in an infrared range between 700 nm and 100 µm, wherein the electromagnetic radiation comprises at least three wavelengths in the visible range, at least one wavelength in a first near infra-red range from 700 nm to 1200 nm and at least one wavelength in a second near-infrared range from 1300 nm to 2600 nm; - recording, using a camera of a mobile phone, signals corresponding to electromagnetic radiation that has interacted with the hair fiber during exposure of the region of the hair fiber, wherein the recorded signals from electromagnetic radiation that has interacted with the hair fiber during exposure of the region of the hair fiber form a plurality of images;
- comparing a spectrum of the recorded signals to reference spectra of hair having known pigment compositions, wherein spectral characteristic of the region of the hair fiber is determined by processing the plurality of images so as to reconstruct a hyperspectral image of the hair fiber;
- identifying a pigment composition in the region of the hair fiber based on the comparison.

The invention adds an element of objectivity to the assessment of the chemical composition of hair fibers, in particular by making it possible to detect complex pigment compositions comprising not just one type of pigment, but virtually any combination of pigments. Reference spectra of hair having known pigment compositions can include both reference spectra of hair fibers having only one type of pigment, or different mixtures of pigments, in different concentrations. Typically, a comparison can be made using a correlation between a measured spectrum and a reference spectrum. More elaborate comparison techniques involving machine learning algorithms and the use of classification models can further improve the identification of pigment compositions. Such techniques can in particular render more accurate a quantification of the amount of pigment per pigment type, even if the determined spectrum does not match an available reference spectrum.

The invention further improves identification of pigment compositions in hair fibers by gathering for example reflected and scattered light within a wavelength range comprising visible and infrared light. Signals comprising more than one wavelength are recorded, and in particular a plurality of wavelengths that can be processed as Hyperfrequency signals. "Hyperfrequency" signals are signals that comprise a spectrally rich information for contiguous spectral bands across a wide wavelength range. It can be a reconstructed signal based on measurements performed using several narrow-band sources or one source or plurality of sources capable of emitting light having a broad spectrum. The spectrum obtained from such signals provides a better identification opportunity of specific spectral features of pigments in the visible as well as in the infrared range.

According to the invention, the electromagnetic radiation may comprise at least three wavelengths in the visible range, at least one wavelength in a first near infra-red range from 700 nm to 1200 nm and at least one wavelength in a second near-infrared range from 1300 nm to 2600 nm.

In order to obtain accurate Hyperfrequency information from light reflected, absorbed and scattered by the hair fiber, a sampling of the visible spectrum with at least three wavelengths is preferred, as well as at least one wavelength in the first near-infrared range (in which the spectrum of natural melanin can be easily distinguished from that of artificial brown dyes due to recognizable absorption features). Gathering reflected light within the second near infrared range between 1300 nm and 2600 nm is advantageous in order to identify vibrational overtones of pigments, which can be easily recognized due to their high intensities in this range. This allows both quantitative and qualitative assessment of the pigment composition of a hair fiber. Accuracy of the prediction can be enhanced if reflected light is measured with devices having an acute sensitivity to wavelengths spaced 10 nm apart within the ranges described above. In particular, 31 wavelengths can be measured with increased spectral intensity in the visible range typically from 100 nm to 700 nm. Generally, sensors have a sensitivity that peaks at a specific wavelength but can still detect signals within a certain range around that peak. In order to obtain a better hyperspectral image of the hair fiber, it is possible to use a plurality of sensors having peak sensitivities every 10 nm in the visible range. Similar arrangements can be used to measure signals in the first and second near infrared ranges.

According to an embodiment the reference spectra may comprise spectra corresponding to electromagnetic radiation in the visible range and the infrared range that has interacted with hair samples having a pigment composition including more than one pigment.

It is in particular possible to use previously recorded spectra for which a pigment composition was already identified as a reference spectrum for future implementations of the method on new hair fibers.

According to an embodiment the reference spectra may be obtained from a database comprising spectral features of hair pigments.

Such a database can be for example accessed online, in scientific literature or via information stored from previously recorded spectra from which a pigment composition of a hair fiber was identified.

According to an embodiment, the method may further comprise:
- identifying the pigment composition in the region of the hair fiber based on the comparison using a machine learning algorithm that generates classification models based on the reference spectra.

Machine learning algorithms make it possible to interpret spectra of complex pigment compositions with more accuracy. The classification models that are generated by analyzing spectral features of reference spectra make it possible to estimate the presence of a pigment, even if it is present in small amounts in the hair fiber, and also to quantify that pigment. A mixture of pigments leads to spectra that do not correlate so closely with reference spectra of hair comprising only one type of pigment. Machine learning trained on a variety of reference spectra overcomes this challenge.

According to an embodiment the machine learning algorithm may use at least one method from a group of methods, wherein the group of methods includes:
linear or multi-linear regression,
multiple polynomic regression,
a neuronal network method,
a deep learning method,
a support vector machine method, and
a decision tree ensemble method.

According to an embodiment, the method may further comprise:
- outputting a qualitative value relating to the presence of pigment of known pigment types identified in the region of the hair fiber.

Typically, the type of pigments that can be identified could be found among melanins, such as eumelanin or phaeomelanin, oxidative coupling products with two nuclei such as indamines, indoanilines, indophenols, more complex coupling products comprising three or more nuclei and direct dyes such as nitro dyes, azo dyes or anthraquinones for example.

According to an embodiment, the method may further comprise:
- outputting a quantitative value relating to the amount of pigments of known pigment types identified in the region of the hair fiber.

A quantitative assessment of the pigment composition in the hair fiber can for example be achieved by comparing the relative intensities of spectral features within the recorded signals with the reference spectra. Accuracy of this detection is enhanced by improving the spectral resolution of the detectors used to record the electromagnetic radiation reflected, absorbed and scattered by the hair fiber. Furthermore, in addition to the spectral resolution, pixel-based sensors having a suitable spatial resolution can provide a spatially resolved information, allowing a distinction in the composition of hair fibers in the tips, lengths or roots of a hair fiber, or in different areas of a strand of hair for example.

According to the invention, the method may further comprise:
- exposing the region of the hair fiber sequentially to electromagnetic radiation of different wavelengths;

wherein the recorded signals from electromagnetic radiation that has interacted with the hair fiber during exposure of the region of the hair fiber form a plurality of images; and
wherein the spectral characteristic of the region of the hair fiber is determined by processing the plurality of images.

Such a method consisting in processing information from a plurality of images can be easily implemented using a portable device such as a smartphone or a simple portable apparatus. First, substantially monochromatic light is cast on the hair fiber or hair fibers. This light can also be non monochromatic and comprise a wider range of wavelengths. Each exposure is configured to cast a different type of wavelength on the hair fiber. The reflected, absorbed and/or scattered light is captured by sensors and a processing of the plurality of images thus recorded is implemented to reconstruct a hyperspectral image of the hair fiber. This method is implemented using a mobile phone.

According to an embodiment, the method may further comprise:
- determining a color of the region of the hair fiber in the visible range using colorimetry;
- comparing the determined color to a color of the identified pigment composition.

Further determining the color of the hair fiber using traditional colorimetry, that is to say spectroscopic tools involving for example the processing of a picture of the hair fiber, can help corroborate the information provided by the spectrum analysis described above. The color that is determined can be parameterized in a color space such as the Lab color space, CIELab or RGB for example.

In case of an incompatibility between the color determined using colorimetry and the properties of the pigment composition that is identified, further processing and comparison of the spectrum with reference spectra can be implemented to correct the identified pigment composition.

According to an embodiment, the method may further comprise:
- obtaining a desired hair color;
- determining a hair coloration composition compatible with the identified pigment compositions in the region of the hair fiber and adapted to dye the hair fiber into the desired hair color.

Knowing more precisely the pigment composition of the hair fiber, it is then possible to recommend hair treatment products (for example shampoos, hair coloration compositions) that are compatible with the current state of the hair fiber. This will reduce the risk of damaging hair or obtaining an undesired hair color.

According to an embodiment electromagnetic radiation that has interacted with the hair fiber during exposure of the region of the hair fiber may comprise electromagnetic radiation reflected by the region of the hair fiber and electromagnetic radiation scattered by the region of the hair fiber.

When interacting with the hair fiber or hair fibers, electromagnetic radiation can be either reflected at the surface of the hair, pass through the hair, be refracted and absorbed, or be scattered by the hair fiber or hair fibers. Absorption signals can be detected, for example by arranging a source and detector at different sides of the hair fiber. The method described above can advantageously easily be implemented by detecting signals reflected by the hair fiber or hair fibers. In such a case, sources of electromagnetic radiation and detectors are advantageously located close to one another, facing the hair fiber or hair fibers.

The disclosure also pertains to a system for determining the composition of pigments in a hair fiber, the system comprising:
- at least one source of electromagnetic radiation capable of generating light comprising wavelengths in a visible range between 400 nm and 700 nm, as well as in an infrared range between 700 nm and 100 µm, the at least one source of electromagnetic radiation being configured to cast the light on a region of the hair fiber;
- at least one detector of electromagnetic radiation configured to record signals from electromagnetic radiation that has interacted with the hair fiber during exposure of the region of the hair fiber;
- at least one non-transitory data processing unit configured to:
- compare a spectrum of the signals recorded by the at least one detector and provided to the non-transitory data processing unit to reference spectra of hair having known pigment compositions;
- identify a pigment composition in the region of the hair fiber based on the comparison.

It is further possible to have more than one source and more than one detector. The number of detectors can be based on the breadth of the spectrum that is to be investigated and also on the spectral resolution that is sought. The finer the resolution and the larger the spectrum, the more accurate can the determination of the pigment composition be.

According to an example, the at least one source and the at least one detector may be arranged on a mobile portable device.

The disclosure also further pertains to a non-transitory computer readable storage medium having stored thereon a computer program comprising instructions for execution of a method for determining a composition of pigments in a hair fiber as described above.

In other words, the disclosure also describes a computer program product comprising instructions for execution of a method for determining a composition of pigments in a hair fiber as described above.

### BRIEF DESRIPTION OF THE DRAWINGS

The present disclosure will hereinafter be described in conjunction with the following drawing figures, wherein like numerals denote like elements, and:
Fig. 1 is a simplified workflow of the method according to an exemplary embodiment;
Fig. 2 is a schematic representation of a system according an exemplary example;
Fig. 3 is a schematic representation of a spectrum of electromagnetic radiation that is projected onto a region of a hair fiber;
Fig. 4 is a schematic representation of a spectrum of recorded electromagnetic radiation that has interacted with the region of hair fiber associated with figure 3.

For the sake of clarity, dimensions of features represented on these figures may not necessarily correspond to the real-size proportion of the corresponding elements.

### DETAILED DESCRIPTION

The following detailed description is merely exemplary in nature and is not intended to limit the disclosure or the application and uses of the subject-matter as described herein. Furthermore, there is no intention to be bound by any theory presented in the preceding background or the following detailed description.

The invention provides a method to determine the pigment composition of a hair fiber using a hyperspectral imagery technique. The invention analyzes the spectra of light reflected by hair fibers over a broad spectral range including both reflected spectra in the visible range between 400 nm and 700 nm and the infrared range, between 700 nm and 100 µm. The infrared range can be restricted to the most relevant portion of the near infrared between 700 nm and 2600 nm.

Spectral features in the recorded signals can be correlated to expected spectral signatures observed in pigmented hair. The use of a broad spectral range with hyperspectral quality makes it possible to assert not only the presence or absence of a pigment of known spectral response in the visible and near infrared range, but also to identify a plurality of pigments, whose spectral signatures are mixed. Machine learning algorithms can improve this determination of overlapping spectral features that would render a direct comparison with the spectral signatures of individual pigments less reliable.

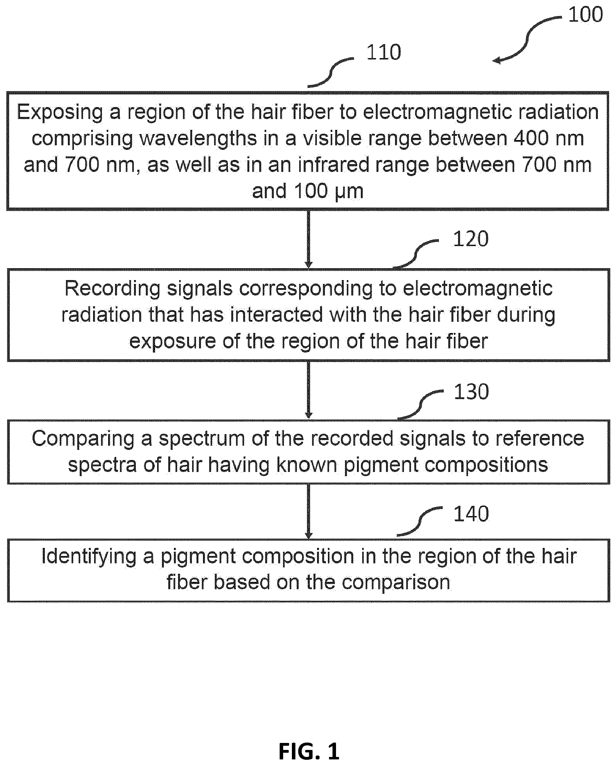

Figure 1 provides a flowchart summarizing four possible steps of a method 100 to determine a pigment composition of a hair fiber using hyperspectral imagery.

A first step may consist in exposing 110 a region of the hair fiber to electromagnetic radiation. The electromagnetic radiation can be cast either all at once using a source advantageously capable of generating a broad spectrum with a substantially homogeneous distribution of intensity peaks, or from several sources generating light within narrower spectral ranges. The exposure should advantageously include at least 3 wavelengths in the visible range between 400 nm and 700 nm, and wavelengths in the infrared range between 700 nm and 100 µm.

More specifically, it has been observed that pigments in hair fibers have strong optical responses noticeable in recorded light reflected by hair in the near infrared range between 1300 nm and 2600 nm, as well as in the range between 700 nm and 1200 nm.

A second step of the method may consist in recording 120 signals corresponding to electromagnetic radiation that has interacted with the hair fiber during exposure of the region of the hair fiber.

This electromagnetic radiation is typically light reflected and scattered by the hair fiber. However, it is also conceivable to record the electromagnetic radiation that is absorbed by the hair fiber in a transmission configuration instead of a reflection configuration.

The detection can be done using one detector sensitive to light both in the visible and in the infrared range. However, a plurality of detectors can also be used to increase sensitivity across the wavelengths that are monitored. The detector is, according to the invention, a camera of a mobile phone. In examples not falling under the scope of the invention the detector can be any type of photodetector, a CCD (charge coupled device) camera, a QWIP (quantum well infrared photodetector), a spectrometer or an array of such devices or a combination of such devices.

The signal that is detected can typically be recorded as a spectrum, as an image or as a waveform.

It is to be noted that detectors can have a high spatial resolution, and thereby provide a spatially resolved information on the composition of a region of a hair fiber. That way, it is possible to distinguish the pigment composition of roots, lengths or tips of hair fibers, and detect differences in hair pigments in different parts of a strand of hair.

A third step consists in comparing 130 a spectrum of the recorded signals to reference spectra of hair having known pigment compositions.

These reference spectra can be absorption features known to be found in known pigments based on available laboratory tests (that could for example be published in scientific publications or databases) or recorded spectra available for random hair samples whose pigment composition is known. It is also possible to use as a reference spectrum the spectrum of a previously analyzed hair fiber for which the method helped identify the pigment composition accurately. Reference spectra are advantageously also obtained via reflection measurements using Hyperspectral imagery techniques.

Advantageously, reference spectra were obtained in the same wavelength ranges as those used to illuminate the region of the hair fiber under investigation. The higher the number of reference spectra available the more accurate can the qualitative as well as quantitative estimation of the pigment composition in the hair fiber be. It is also possible to include reference spectra for pigmented hair comprising only one type of pigment and/or reference spectra for pigmented hair comprising more than one type of hair pigment.

Finally the method continues by identifying 140 a pigment composition in the region of the hair fiber based on the comparison.

A machine learning algorithm can be trained to identify relevant spectral features from such reference spectra, in order to distinguish not only the mere presence or absence of a pigment in the region of a hair fiber, but also estimate the amount of pigment in the hair fiber. Spectral intensity information, combined with the wavelength information can be used to achieve such a quantitative assessment of the presence of pigments and the amount in which they are present. The result of the identification step can be outputted in the form of a qualitative information, indicating the presence of pigments by naming them and/or by mentioning what pigments are not present in the region of hair fiber investigated among a list of known pigments. It is also possible to output a more quantitative information, by indicating a range of concentrations for each identified and/or known pigment type. For example, it is possible to define low, medium and high concentration values. If the spectral features identifying the presence of a pigment hint towards a high low or medium concentration, this information can be provided in an output showed for example to a user.

Regression approaches and machine learning algorithms can provide an even more precise identification of the concentration of each pigment type in the hair fiber. The output can then provide an absolute value for a concentration of each identified pigment, or else relative percentages for each pigment in the hair fiber. The percentages can for example be expressed as parts per weight.

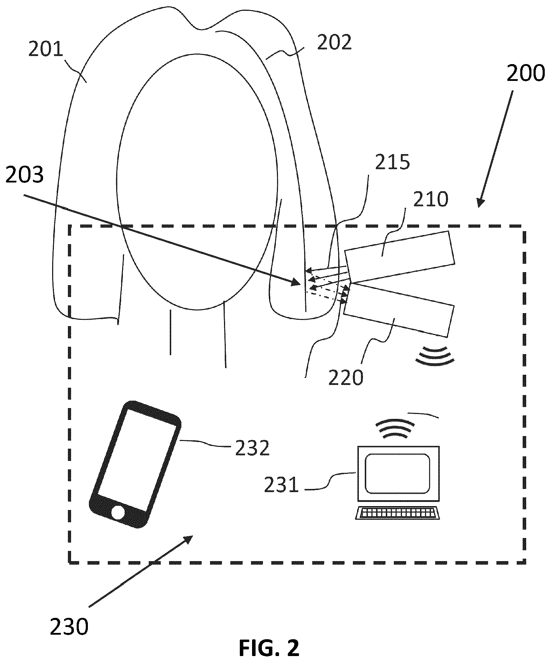

In order to implement the method described above in connection with figure 1, a system 200 as that illustrated on figure 2 can be used.

Figure 2 shows hair 201 of a user. A hair strand comprising hair fiber 202 is illuminated with a source 210 of electromagnetic radiation 215. Hair region 203 of hair fiber 202 reflects and scatters this electromagnetic radiation which is then detected in its modified form by detector 220. In the system 200 represented on figure 2, detector 220 communicates wirelessly with a non-transitory data processing unit 230, which can for example be a computer 231 or a portable mobile device 232. The source 210 can also have communication capabilities with a data processing unit and be programmed to emit electromagnetic radiation according to a sequence. As an alternative to wireless communication, wired communication can also be used. All sorts of communication protocols can be used to receive and/or send information to/from the source 210, detector 220 and non-transitory data processing unit 230.

Although figure 2 only represents one source 210 and one detector 220, a plurality of sources and detectors can be used, in order to cast light of different wavelengths on the region 203 of hair fiber 202.

The electromagnetic radiation can be cast all at once, from a source 220 or plurality of sources capable of generating a broad spectrum covering the visible range with wavelengths between 400 nm and 700 nm as well as the infrared range with wavelengths from 700 nm to 100 µm and more particularly the near-infrared range with wavelengths from 700 nm to 2600 nm.

The electromagnetic radiation can also be cast and/or recorded in sequence. For example, a first round of measurements can comprise illumination using monochromatic or narrow-spectrum sources on the hair fiber 202 in the visible range. Then narrow-spectrum sources in the near infrared are used. Detectors adapted for each type of electromagnetic radiation to be detected can then be used. A reconstructed spectrum can be built using the different measurements that were made.

Another alternative may consist in using the Hawkspecs algorithm developed by Fraunhofer Institute. To do so, a mobile device 232 such as a smartphone can be used to cast light generated by one group of light emitting sources (diodes, LED) from the screen of the mobile device on the region 203 of the hair fiber 202. The camera of the mobile device 232 is used to capture images in each illumination condition. These images are then processed using an algorithm to reconstruct a Hyperspectral image of the hair fiber 202, based on a limited number of wavelengths. Further use of near-infrared sources can be associated in combination with such an approach to provide more accurate results concerning spectral features modified during interaction with the hair fiber at infrared wavelengths.

The non-transitory data processing unit 230 typically comprises components capable of storing information, in particular the signals recorded and sent by the detector 220. It may further comprise at least one processor to convert, if necessary, waveform information provided by the detector 220 into a spectrum, and compare that spectrum to features extracted from reference spectra of hair having known pigment compositions. The non-transitory data processing unit 230 can further possess an interface capable of receiving inputs by users and to display information, such as outputting the qualitative and or quantitative assessment of the pigment composition of the hair fiber 202. The interface may be capable of interacting with the user based on vocal command, using a keyboard or via a menu in which the user selects the type of pigments he wishes to use or the hair properties he would like to have taken into account when determining a suitable hair treatment product. The non-transitory data processing unit 230 may for example comprise a program which queries the type of information the user is willing to obtain about the hair fiber 202, or which type of hair coloration treatment he would like to undergo.

Based on the determined pigment composition of the hair fiber, the non-transitory data processing unit 230 may determine what coloration products or hair treatment products are compatible with the current state of the hair fiber 202, to avoid further damage or modification of the hair color from a desired hair color, A user may provide his desired hair color or hair state, to receive recommendations on the type of pigments or hair coloration products that he may use based on the determined pigment composition.

In order to further corroborate the results determined by the method implemented with system 200, a colorimetric measurement may be performed on the region 203 of the hair fiber 202, to determine a color of the hair fiber 202. The thus determined hair color can be compared to the color expected for the pigment composition that has been identified. In case of a disagreement, a recommendation to run the method one more time may be provided.

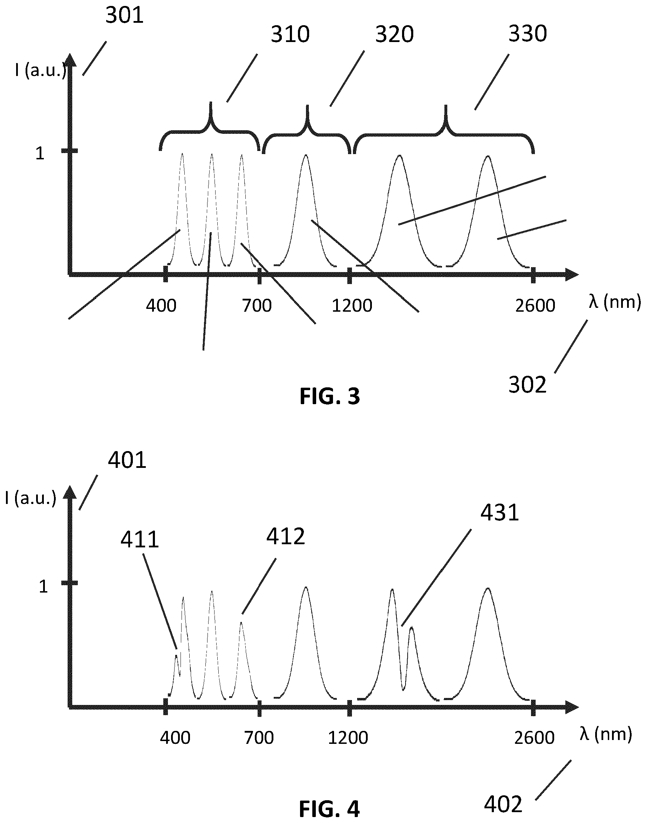

In order to further illustrate the Hyperspectral imagery method of the invention, figures 3 and 4 provide a schematic view of spectra of light that can be cast on the hair fiber 202 and detected after interaction with the hair fiber.

Figure 3 shows spectral intensity on vertical axis 301 versus wavelengths on a horizontal axis 302. In the schematic example of figure 3, the visible range 310 between 400 nm and 700 nm comprises three wavelengths with a particularly strong spectral intensity. Since most sources, even when they emit substantially monochromatic light, have a certain spectral width, it is possible to cover enough portions of the visible spectrum with few light sources. In most cases, only portions of the visible spectrum are covered in the light that is cast on the hair fiber. According to a preferred embodiment, the light source or light sources is/are capable of providing enough spectrum intensity across the entire visible range so that a detection of reflected light can be achieved with a 10 nm resolution, that is to say with recorded signals having a particularly strong spectral intensity for reflected light every 10 nm between 400 nm and 700 nm, amounting to 31 input variables in the visible range.

Figure 3 further shows a gaussian spectrum for electromagnetic radiation generated in a first near infrared range 320 between 700 nm and 1200 nm and two gaussian spectra for electromagnetic radiation generated in a second near infrared range 330 corresponding to wavelengths between 1200 nm or 1300 nm and 2600 nm. Similarly to what has been described in relation with the visible spectrum 310, more light sources can be used and a higher number of wavelengths with high spectral intensity in the near infrared range can be generated and detected.

The second near-infrared range 330 can provide particularly strong absorption spectra in the light reflected and scattered by the hair fiber 202.

Figure 4 schematically illustrates a spectrum that can be determined for recorded signals corresponding to electromagnetic radiation that has interacted with the hair fiber 202. Figure 4 therefore shows how the spectrum of figure 3 is modified after interaction (in particular reflection and scattering) in the hair fiber 202.

Figure 4 shows spectral intensity along a vertical axis 401 versus wavelengths along a horizontal axis 402. Strong modification of the intensity of the spectrum in the second near infrared range can be seen with absorption feature 431. Another particularly noticeable feature in the visible spectrum is seen with absorption dip 411, and reduction of intensity 412. These spectral features are then compared to reference spectra, which can for example be spectra obtained in similar conditions on hair samples that have a known pigment composition.

Reference spectra may also merely be general information on the absorption properties of individual pigments or combinations thereof, performed via traditional spectroscopic methods and available in scientific literature or in any other form of database.

Based on this comparison, if a high correlation exists between the spectral feature identified in the spectrum that is obtained from the signals recorded by the detector 220 and the reference spectra, a pigment and its amount in the hair fiber 202 can be identified.

An advantage of the invention is that pigments and their amount in the hair fiber 202 can be identified even if the hair fiber comprises a complex mix of natural and or artificial pigments.

For example, among known pigments, the following chemicals might be investigated and identified in a hair fiber:
melanins, such as eumelanin or phaeomelanin, oxidative coupling products with two nuclei such as indamines, indoanilines, indophenols, more complex coupling products comprising three or more nuclei and direct dyes such as nitro dyes, azo dyes or anthraquinones for example. In the spectral range comprising wavelengths between 800 nm and 1100 nm,
melanin can be particularly well identified as opposed to artificial pigments.

The steps of the examples and embodiments described above can be implemented by a processor such as a computer. A computer program product comprising steps of the above-described method can be used to implement the method on a computer.

Different types of non-transitory computer readable storage mediums on which a computer program comprising instructions to implement the method of the invention can be used. These could for example comprise a processor or chip, an electronic circuit comprising several processors or chips, a hard drive, a flash or SD card, a USB stick, a CD-ROM or DVD-ROM or Blue-Ray disc, or a diskette or floppy disk.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. A method (100) for determining a composition of pigments in a hair fiber (202), the method comprising:
- exposing (110) a region (203) of the hair fiber (202) sequentially to electromagnetic radiation of different wavelengths, wherein the electromagnetic radiation (215) comprises wavelengths in a visible range (310) between 400 nm and 700 nm, as well as wavelengths in an infrared range between 700 nm and 100 µm, wherein the electromagnetic radiation comprises at least three wavelengths in the visible range, at least one wavelength in a first near infra-red range (320) from 700 nm to 1200 nm and at least one wavelength in a second near-infrared range (330) from 1300 nm to 2600 nm;
- recording (120), using a camera of a mobile phone, signals corresponding to electromagnetic radiation that has interacted with the hair fiber during exposure of the region of the hair fiber, wherein the recorded signals from electromagnetic radiation that has interacted with the hair fiber during exposure of the region of the hair fiber form a plurality of images;
- comparing (130) a spectrum of the recorded signals to reference spectra of hair having known pigment compositions, wherein spectral characteristic of the region of the hair fiber is determined by processing the plurality of images so as to reconstruct a hyperspectral image of the hair fiber;
- identifying (140) a pigment composition in the region of the hair fiber based on the comparison.

2. The method according to claim 1, wherein the reference spectra comprise spectra corresponding to electromagnetic radiation in the visible range and the infrared range that has interacted with hair samples having a pigment composition including more than one pigment.

3. The method according to any one of the preceding claims, wherein the reference spectra are obtained from a database comprising spectral features of hair pigments.

4. The method according to any one of the preceding claims, further comprising:
- identifying the pigment composition in the region of the hair fiber based on the comparison using a machine learning algorithm that generates classification models based on the reference spectra.

5. The method according to claim 4, wherein the machine learning algorithm uses at least one method from a group of methods, wherein the group of methods includes:
linear or multi-linear regression,
multiple polynomic regression,
a neuronal network method,
a deep learning method,
a support vector machine method, and
a decision tree ensemble method.

6. The method according to any one of the preceding claims, further comprising:
- outputting a qualitative value relating to the presence of pigment of known pigment types identified in the region of the hair fiber.

7. The method according to any one of the preceding claims, further comprising:
- outputting a quantitative value relating to the amount of pigments of known pigment types identified in the region of the hair fiber.

8. The method according to any one of the preceding claims, further comprising:
- determining a color of the region of the hair fiber in the visible range using colorimetry;
- comparing the determined color to a color of the identified pigment composition.

9. The method according to any one of the preceding claims, further comprising:
- obtaining a desired hair color;
- determining a hair coloration composition compatible with the identified pigment compositions in the region of the hair fiber and adapted to dye the hair fiber into the desired hair color.

10. The method according to any one of the preceding claims, wherein electromagnetic radiation that has interacted with the hair fiber during exposure of the region of the hair fiber comprises electromagnetic radiation reflected by the region of the hair fiber and electromagnetic radiation scattered by the region of the hair fiber.

## Patentansprüche

1. Verfahren (100) zum Bestimmen einer Zusammensetzung von Pigmenten in einer Haarfaser (202), das Verfahren umfassend:
- sequentielles Aussetzen (110) eines Bereichs (203) der Haarfaser (202) gegenüber elektromagnetischer Strahlung unterschiedlicher Wellenlängen, wobei die elektromagnetische Strahlung (215) Wellenlängen in einem sichtbaren Bereich (310) zwischen 400 nm und 700 nm sowie Wellenlängen in einem Infrarotbereich zwischen 700 nm und 100 µm umfasst, wobei die elektromagnetische Strahlung mindestens drei Wellenlängen in dem sichtbaren Bereich, mindestens eine Wellenlänge in einem ersten Nahinfrarotbereich (320) von 700 nm bis 1200 nm und mindestens eine Wellenlänge in einem zweiten Nahinfrarotbereich (330) von 1300 nm bis 2600 nm umfasst;
- Aufzeichnen (120) von Signalen, die elektromagnetischer Strahlung entsprechen, die während der Aussetzung des Bereichs der Haarfaser mit der Haarfaser interagiert hat, unter Verwendung einer Kamera eines Mobiltelefons, wobei die aufgezeichneten Signale von der elektromagnetischen Strahlung, die während der Aussetzung des Bereichs der Haarfaser mit der Haarfaser interagiert hat, eine Vielzahl von Bildern ausbilden;
- Vergleichen (130) eines Spektrums der aufgezeichneten Signale mit Referenzspektren von Haaren, die bekannte Pigmentzusammensetzungen aufweisen, wobei eine spektrale Charakteristik des Bereichs der Haarfaser durch Verarbeiten der Vielzahl von Bildern bestimmt wird, um ein hyperspektrales Bild der Haarfaser zu rekonstruieren;
- Identifizieren (140) einer Pigmentzusammensetzung in dem Bereich der Haarfaser basierend auf dem Vergleich.

2. Verfahren nach Anspruch 1, wobei die Referenzspektren Spektren umfassen, die elektromagnetischer Strahlung in dem sichtbaren Bereich und dem Infrarotbereich entsprechen, der mit Haarproben interagiert hat, die eine Pigmentzusammensetzung aufweisen, die mehr als ein Pigment einschließt.

3. Verfahren nach einem der vorstehenden Ansprüche, wobei die Referenzspektren aus einer Datenbank, umfassend spektrale Merkmale von Haarpigmenten, gewonnen werden.

4. Verfahren nach einem der vorstehenden Ansprüche, ferner umfassend:
- Identifizieren der Pigmentzusammensetzung in dem Bereich der Haarfaser basierend auf dem Vergleich unter Verwendung eines maschinellen Lernalgorithmus, der Klassifizierungsmodelle basierend auf den Referenzspektren erzeugt.

5. Verfahren nach Anspruch 4, wobei der maschinelle Lernalgorithmus mindestens ein Verfahren aus einer Gruppe von Verfahren verwendet, wobei die Gruppe von Verfahren einschließt:
lineare oder multilineare Regression,
multiple polynomische Regression,
ein neuronales Netzwerkverfahren,
ein Deep-Learning-Verfahren,
ein Support-Vector-Machine-Verfahren, und
ein Entscheidungsbaum-Ensemble-Verfahren.

6. Verfahren nach einem der vorstehenden Ansprüche, ferner umfassend:
- Ausgeben eines qualitativen Wertes in Bezug auf das Vorhandensein von Pigmenten bekannter Pigmenttypen, die in dem Bereich der Haarfaser identifiziert wurden.

7. Verfahren nach einem der vorstehenden Ansprüche, ferner umfassend:
- Ausgeben eines quantitativen Wertes in Bezug auf die Menge an Pigmenten bekannter Pigmenttypen, die in dem Bereich der Haarfaser identifiziert wurden.

8. Verfahren nach einem der vorstehenden Ansprüche, ferner umfassend:
- Bestimmen einer Farbe des Bereichs der Haarfaser in dem sichtbaren Bereich unter Verwendung von Farbmetrik;
- Vergleichen der bestimmten Farbe mit einer Farbe der identifizierten Pigmentzusammensetzung.

9. Verfahren nach einem der vorstehenden Ansprüche, ferner umfassend:
- Erhalten einer gewünschten Haarfarbe;
- Bestimmen einer Haarfärbezusammensetzung, die mit den identifizierten Pigmentzusammensetzungen in dem Bereich der Haarfaser kompatibel ist und geeignet ist, um die Haarfaser in die gewünschte Haarfarbe zu färben.

10. Verfahren nach einem der vorstehenden Ansprüche, wobei elektromagnetische Strahlung, die während der Aussetzung des Bereichs der Haarfaser mit der Haarfaser interagiert hat, elektromagnetische Strahlung, die durch den Bereich der Haarfaser reflektiert wird, und elektromagnetische Strahlung, die durch den Bereich der Haarfaser gestreut wird, umfasst.

## Revendications

1. Procédé (100) destiné à déterminer une composition de pigments dans une fibre capillaire (202), le procédé comprenant :
- l'exposition (110) d'une région (203) de la fibre capillaire (202) séquentiellement à un rayonnement électromagnétique de différentes longueurs d'onde, dans lequel le rayonnement électromagnétique (215) comprend des longueurs d'onde dans un domaine visible (310) entre 400 nm et 700 nm, ainsi que des longueurs d'onde dans un domaine infrarouge entre 700 nm et 100 µm, dans lequel le rayonnement électromagnétique comprend au moins trois longueurs d'onde dans le domaine visible, au moins une longueur d'onde dans un premier domaine proche infrarouge (320) compris entre 700 nm et 1200 nm et au moins une longueur d'onde dans un second domaine proche infrarouge (330) compris entre 1300 nm et 2600 nm ;
- l'enregistrement (120), à l'aide de la caméra d'un téléphone portable, des signaux correspondant au rayonnement électromagnétique qui a interagi avec la fibre capillaire pendant l'exposition de la région de la fibre capillaire, dans lequel les signaux enregistrés du rayonnement électromagnétique qui a interagi avec la fibre capillaire pendant l'exposition de la région de la fibre capillaire forment une pluralité d'images ;
- la comparaison (130) d'un spectre des signaux enregistrés à des spectres de référence de cheveux ayant des compositions pigmentaires connues, dans lequel la caractéristique spectrale de la région de la fibre capillaire est déterminée par le traitement de la pluralité d'images de manière à reconstruire une image hyperspectrale de la fibre capillaire ;
- l'identification (140) d'une composition pigmentaire dans la région de la fibre capillaire sur la base de la comparaison.

2. Procédé selon la revendication 1, dans lequel les spectres de référence comprennent des spectres correspondant à un rayonnement électromagnétique dans le domaine visible et le domaine infrarouge qui a interagi avec des échantillons de cheveux ayant une composition pigmentaire comprenant plus d'un pigment.

3. Procédé selon l'une quelconque des revendications précédentes, dans lequel les spectres de référence sont obtenus à partir d'une base de données comprenant des caractéristiques spectrales de pigments de cheveux.

4. Procédé selon l'une quelconque des revendications précédentes, comprenant en outre :
- l'identification de la composition pigmentaire dans la région de la fibre capillaire sur la base de la comparaison à l'aide d'un algorithme d'apprentissage automatique qui génère des modèles de classification basés sur les spectres de référence.

5. Procédé selon la revendication 4, dans lequel l'algorithme d'apprentissage automatique utilise au moins un procédé d'un groupe de procédés, dans lequel le groupe de procédés comporte :
une régression linéaire ou multilinéaire,
une régression polynomique multiple,
un procédé de réseau neuronal,
un procédé d'apprentissage en profondeur,
un procédé de machine à vecteur de support, et
un procédé d'ensemble d'arbres de décision.

6. Procédé selon l'une quelconque des revendications précédentes, comprenant en outre :
- l'émission d'une valeur qualitative relative à la présence de pigments de types connus identifiés dans la région de la fibre capillaire.

7. Procédé selon l'une quelconque des revendications précédentes, comprenant en outre :
- la production d'une valeur quantitative relative à la quantité de pigments de types connus identifiés dans la région de la fibre capillaire.

8. Procédé selon l'une quelconque des revendications précédentes, comprenant en outre :
- la détermination de la couleur de la région de la fibre capillaire dans le domaine visible à l'aide de la colorimétrie ;
- la comparaison de la couleur déterminée à une couleur de la composition pigmentaire identifiée.

9. Procédé selon l'une quelconque des revendications précédentes, comprenant en outre :
- l'obtention de la couleur de cheveux désirée ;
- la détermination d'une composition de coloration capillaire compatible avec les compositions pigmentaires identifiées dans la région de la fibre capillaire et adaptée pour teindre la fibre capillaire dans la couleur de cheveux souhaitée.

10. Procédé selon l'une quelconque des revendications précédentes, dans lequel le rayonnement électromagnétique qui a interagi avec la fibre capillaire pendant l'exposition de la région de la fibre capillaire comprend le rayonnement électromagnétique réfléchi par la région de la fibre capillaire et le rayonnement électromagnétique diffusé par la région de la fibre capillaire.
